# EUROPÄISCHE PATENTSCHRIFT

(11) **EP 3 866 999 B1**
(45) Veröffentlichungstag und Bekanntmachung des Hinweises auf die Patenterteilung: **15.03.2023**
(21) Anmeldenummer: 19782572.2
(22) Anmeldetag: 01.10.2019
(51) Int. Cl.: B29C 64/153, B33Y 10/00, B33Y 30/00, B33Y 50/02, B29C 64/268, B22F 10/28, B22F 12/49, B22F 10/366

(54) **VERFAHREN UND VORRICHTUNG ZUM HERSTELLEN EINES DREIDIMENSIONALEN WERKSTÜCKS**
METHOD AND DEVICE FOR PRODUCING A THREE-DIMENSIONAL WORKPIECE
PROCÉDÉ ET DISPOSITIF DE FABRICATION D'UNE PIÈCE TRIDIMENSIONNELLE

(30) Priorität: 17.10.2018 DE 102018125731
(43) Veröffentlichungstag der Anmeldung: 25.08.2021
(73) Patentinhaber: SLM Solutions Group AG, 23560 Lübeck (DE)
(72) Erfinder: KROL, Toni Adam, 23560 Luebeck (DE); WILKES, Jan, 23560 Luebeck (DE); STENGEL, Christopher, 23560 Luebeck (DE)
(74) Vertreter: Schicker, Silvia
(86) Internationale Anmeldenummer: PCT/EP2019/076560
(87) Internationale Veröffentlichungsnummer: WO 2020/078713

(56) Entgegenhaltungen:
- US-A1- 2006 215 246
- US-A1- 2018 036 943
- RÖMER G R B E ET AL: "Electro-optic and Acousto-optic Laser Beam Scanners", PHYSICS PROCEDIA, ELSEVIER, AMSTERDAM, NL, Bd. 56, 9. September 2014 (2014-09-09), Seiten 29-39, XP029053187, ISSN: 1875-3892, DOI: 10.1016/J.PHPRO.2014.08.092

## Beschreibung

Die Erfindung betrifft ein Verfahren und eine Vorrichtung zum Herstellen eines dreidimensionalen Werkstücks. Insbesondere betrifft die Erfindung ein Verfahren und eine Vorrichtung zum Herstellen eines dreidimensionalen Werkstücks mithilfe eines generativen Schichtbauverfahrens.

Bei generativen Verfahren zum Herstellen dreidimensionaler Werkstücke und insbesondere bei generativen Schichtbauverfahren ist es bekannt, eine zunächst formlose oder formneutrale Formmasse (zum Beispiel ein Rohstoffpulver) schichtweise auf einen Träger aufzutragen und durch ortsspezifisches Bestrahlen zu verfestigen (z. B. durch Verschmelzen oder Versintern), um letztendlich ein Werkstück einer gewünschten Form zu erhalten. Das Bestrahlen kann mittels elektromagnetischer Strahlung erfolgen, beispielsweise in Form von Laserstrahlung. In einem Ausgangszustand kann die Formmasse zunächst als Granulat, als Pulver oder als flüssige Formmasse vorliegen und infolge der Bestrahlung selektiv oder, anders ausgedrückt, ortsspezifisch verfestigt werden. Die Formmasse kann zum Beispiel Keramik-, Metall- oder Kunststoffmaterialien umfassen und auch Materialgemische hieraus. Eine Variante von generativen Schichtbauverfahren betrifft das sogenannte Laserstrahlschmelzen im Pulverbett, bei dem insbesondere metallische und/oder keramische Rohstoffpulvermaterialien zu dreidimensionalen Werkstücken verfestigt werden.

Zum Herstellen einzelner Werkstückschichten ist es ferner bekannt, Rohstoffpulvermaterial in Form einer Rohstoffpulverschicht auf einen Träger aufzubringen und selektiv sowie nach Maßgabe der Geometrie der aktuell herzustellenden Werkstückschicht zu bestrahlen. Die Laserstrahlung dringt in das Rohstoffpulvermaterial ein und verfestigt dieses, beispielsweise in Folge eines Erhitzens, was ein Schmelzen oder Sintern verursacht. Ist eine Werkstückschicht verfestigt, wird eine neue Schicht von unverarbeitetem Rohstoffpulvermaterial auf die bereits hergestellte Werkstückschicht aufgebracht. Hierzu können bekannte Beschichteranordnungen oder Pulverauftragsvorrichtungen verwendet werden. Anschließend erfolgt eine erneute Bestrahlung der nun obersten und noch unverarbeiteten Rohstoffpulverschicht. Folglich wird das Werkstück sukzessive Schicht für Schicht aufgebaut, wobei jede Schicht eine Querschnittsfläche und/oder eine Kontur des Werkstücks definiert. In diesem Zusammenhang ist es ferner bekannt, auf CAD- oder vergleichbare Werkstückdaten zurückzugreifen, um die Werkstücke im Wesentlichen automatisch herzustellen.

Eine Bestrahlungseinheit bzw. ein Bestrahlungssystem, das zum Beispiel in einer Vorrichtung zum Herstellen dreidimensionaler Werkstücke durch Bestrahlen von Rohstoffpulvermaterialien verwendbar ist, wird in der EP 2 333 848 B1 beschrieben. Das Bestrahlungssystem umfasst eine Strahlquelle, insbesondere eine Laserquelle, und eine optische Einheit. Die optische Einheit, der ein von der Strahlquelle ausgesandter Bearbeitungsstrahl zur Verfügung gestellt wird, umfasst eine Strahlenaufweiteinheit und eine Ablenkvorrichtung in Form einer Scannereinheit (oder Scan-Einheit).

US 2018/036943 A1 offenbart eine additive Fertigungsvorrichtung mit einem Scanner. Der Scanner umfasst eine optische Komponente, die unter der Steuerung eines ersten Aktuators betreibbar ist, um den Laserstrahl über einen ersten Winkelbereich in einer ersten Dimension zu reflektieren, wobei die oder eine weitere optische Komponente unter der Steuerung eines zweiten Aktuators betreibbar ist, um den Laserstrahl über einen zweiten Winkelbereich in der ersten Dimension zu reflektieren, wobei der zweite Aktuator eine schnellere dynamische Reaktion, aber einen kleineren Bewegungsbereich des Laserstrahls bereitstellt als der erste Aktuator.

RÖMER G R B E ET AL: "Electro-optic and Acousto-optic Laser Beam Scanners", PHYSICS PROCEDIA, ELSEVIER, AMSTERDAM, NL, Bd. 56, 9. September 2014 (2014-09-09), Seiten 29-39, XP029053187,ISSN: 1875-3892, DOI: 10.1016/J.PHPRO.2014.08.092 offenbart eine Reihenanordnung einer optischen Ablenkeinheit und eines mechanischen Scanners.

Es versteht sich, dass im Rahmen der vorliegenden Erfindung sämtliche der vorstehend erläuterten Aspekte ebenfalls vorgesehen sein können.

Bekannte Vorrichtungen zum Herstellen von dreidimensionalen Werkstücken finden sich beispielsweise in der EP 2 961 549 A1 und in der EP 2 878 402 A1.

Im Zuge größer werdender Bauvolumen (insbesondere Bauzylinder) und der damit einhergehenden Möglichkeit, größere Werkstücke herzustellen, dauern die entsprechenden Bauprozesse immer länger. Insbesondere in diesem Zusammenhang ist eine Steigerung der Prozessproduktivität wünschenswert. Genauer gesagt ist es wünschenswert, eine möglichst große Fläche an Rohmaterial bzw. ein möglichst großes Volumen an Rohmaterial in möglichst kurzer Zeit zu verfestigen, um eine gesamte Prozessdauer zu verkürzen. Unter einer Verkürzung der Prozessdauer soll jedoch die Qualität des hergestellten Werkstücks möglichst nicht leiden.

Eine Möglichkeit, die Prozessproduktivität zu erhöhen besteht darin, mehrere Strahlquellen vorzusehen, sodass gleichzeitig mehrere Strahlen auf das Rohmaterial gelenkt werden können. Eine hierzu ähnliche Möglichkeit besteht darin, einen eintreffenden Laserstrahl in mehrere Teilstrahlen aufzuteilen und diese Teilstrahlen entweder gemeinsam oder individuell gesteuert mithilfe einer oder mehrerer Scanner-Einheiten über das Rohmaterial zu lenken.

Die obigen Möglichkeiten sind jedoch verhältnismäßig teuer, erfordern einen großen Platzbedarf und/oder teure bzw. aufwändige optische Komponenten.

Aufgabe der Erfindung ist es daher, eine Lösung für ein generatives Schichtaufbauverfahren bereitzustellen, welche die oben genannten Probleme und andere damit zusammenhängende Probleme verringert oder überwindet.

Diese Aufgabe wird durch ein Verfahren mit den Merkmalen des Patentanspruchs 1 sowie eine Vorrichtung mit den Merkmalen des Patentanspruchs 4 gelöst.

Die Erfindung betrifft demnach gemäß einem ersten Aspekt ein Verfahren zum Herstellen eines dreidimensionalen Werkstücks. Das Verfahren umfasst Bestrahlen einer Rohmaterialschicht mit einem Laserstrahl, wobei an einer Stelle, an der der Laserstrahl auf die Rohmaterialschicht trifft, ein Schmelzbad erzeugt wird, Verändern einer Position des Laserstrahls auf der Rohmaterialschicht mithilfe einer ersten Ablenkeinheit und Verändern der Position des Laserstrahls auf der Rohmaterialschicht mithilfe einer zweiten Ablenkeinheit. Die zweite Ablenkeinheit ist dazu eingerichtet, die Position des Laserstrahls mit einer größeren Beschleunigung abzulenken als eine maximal mögliche Beschleunigung einer Ablenkung durch die erste Ablenkeinheit. Das Verfahren umfasst ferner das Erzeugen mindestens eines ersten Schmelzbads und eines zweiten Schmelzbads, wobei der Laserstrahl durch das Verändern der Position mithilfe der zweiten Ablenkeinheit zwischen dem ersten Schmelzbad und dem zweiten Schmelzbad hin und her bewegt wird. Das erste Schmelzbad und das zweite Schmelzbad werden zeitlich kontinuierlich aufrechterhalten und durch das Verändern der Position mithilfe der ersten Ablenkeinheit über die Rohmaterialschicht bewegt. Der Laserstrahl wird durch das Verändern der Position mithilfe der zweiten Ablenkeinheit mit einer Beschleunigung, die mehr als ein Faktor 10 größer ist als die einer Bewegung des ersten Schmelzbads und des zweiten Schmelzbads durch die erste Ablenkeinheit, so zwischen dem ersten und dem zweiten Schmelzbad hin und her bewegt, dass der Laserstrahl zwischen dem ersten Schmelzbad und dem zweiten Schmelzbad kein Schmelzbad erzeugt.

Der Laserstrahl kann von einem für Strahlschmelztechniken üblicherweise verwendeten Laser erzeugt werden. Beispielsweise kann ein Nd:YAG-Laser verwendet werden, welcher einen Laserstrahl mit einer Wellenlänge von 1064 nm erzeugt. Bei der Rohmaterialschicht kann es sich um eine oberste Schicht von Rohmaterial handeln, welches zuvor schichtweise auf einen Träger aufgetragen wurde. Das Rohmaterial kann beispielsweise als Pulver oder Granulat vorliegen und beispielsweise Metall, Keramik und/oder Kunststoff umfassen. Der Begriff "Schmelzbad" wird in der gesamten vorliegenden Offenbarung als Überbegriff für einen Bereich der Rohmaterialschicht verwendet, welcher unter Einwirkung des Laserstrahls kurzzeitig so erhitzt ist, dass sich das in diesem Bereich befindliche Rohmaterial verfestigen kann (beispielsweise durch Verschmelzen oder Versintern). Es kann sich somit bei dem "Schmelzbad" gemäß der vorliegenden Offenbarung beispielsweise im Falle des selektiven Lasersinterns auch um einen Sinterbereich handeln. Die erste Ablenkeinheit und die zweite Ablenkeinheit können beide im Strahlengang des Laserstrahls hintereinander angeordnet sein. Die zweite Ablenkeinheit kann im Strahlengang vor oder hinter der ersten Ablenkeinheit angeordnet sein. Die erste Ablenkeinheit und die zweite Ablenkeinheit können von einer Steuereinheit unabhängig voneinander angesteuert werden. Die erste Ablenkeinheit kann beispielsweise dazu eingerichtet sein, den Laserstrahl in zwei Dimensionen (x-Richtung und y-Richtung) über die Rohmaterialschicht zu bewegen. Ferner kann die zweite Ablenkeinheit dazu geeignet sein, den Laserstrahl in eine oder zwei Richtungen abzulenken (beispielsweise in x-Richtung und y-Richtung bezüglich der Rohmaterialschicht). Zusätzlich kann eine Fokussier-Einheit vorgesehen sein, welche eine Fokusposition in z-Richtung des Laserstrahls verändern und anpassen kann. Das Verändern der Position des Laserstrahls auf der Rohmaterialschicht kann somit allgemein bedeuten, dass die Position des Laserstrahls innerhalb einer Ebene der Rohmaterialschicht (d. h. innerhalb der x-y-Ebene) verändert wird. Unabhängig davon kann zusätzlich dazu eine Veränderung der Fokuslage (in z-Richtung) durchgeführt werden.

Die Tatsache, dass die zweite Ablenkeinheit dazu eingerichtet ist, die Position des Laserstrahls mit einer größeren Beschleunigung abzulenken als eine maximal mögliche Beschleunigung einer Ablenkung durch die erste Ablenkeinheit beschreibt strukturelle physikalische Eigenschaften der ersten und der zweiten Ablenkeinheit. Anders ausgedrückt, ist die zweite Ablenkeinheit aufgrund ihrer Ausgestaltung dazu in der Lage, den Laserstrahl mit einer größeren Beschleunigung abzulenken als die erste Ablenkeinheit. Bei der Beschleunigung kann es sich insbesondere um eine Beschleunigung ausgehend von einer Ruhelage der Position des Laserstrahls handeln, also unmittelbar nach dem der Laserstrahl aus einer Ruhelage heraus bewegt wird. Ein Galvanometerspiegel weist beispielsweise im Gegensatz zu einem elektrooptischen Ablenker eine gewisse Trägheit auf (insbesondere ausgehend von einer Ruhelage des Spiegels), sodass ein Galvanometerspiegel nicht in der Lage ist, eine Ablenkung mit derselben hohen Beschleunigung wie ein elektrooptischer Ablenker durchzuführen.

In einem Beispiel umfasst die erste Ablenkeinheit eine Scan-Einheit mit mindestens einem beweglichen Spiegel und die zweite Ablenkeinheit umfasst einen elektrooptischen Ablenker. Ein Beispiel für eine alternative zweite Ablenkeinheit umfasst beispielsweise mindestens einen akustooptischen Deflektor. Ferner kann beispielsweise sowohl für die erste Ablenkeinheit als auch für die zweite Ablenkeinheit eine Scan-Einheit mit beweglichen Spiegeln verwendet werden (beispielsweise Galvanometerspiegel), wobei die Spiegel der zweiten Ablenkeinheit eine Bewegung bzw. eine Ablenkung des Laserstrahls mit einer höheren Beschleunigung ermöglichen als die Spiegel der ersten Ablenkeinheit.

Durch die Kombination aus erster Ablenkeinheit und zweiter Ablenkeinheit lassen sich Scan-Vektoren verwirklichen, welche mit der ersten Ablenkeinheit alleine nicht möglich wären. Beispielsweise lässt sich ein zeitlicher und räumlicher Verlauf von einem oder mehreren Schmelzbädern realisieren, welcher durch eine einzige erste Ablenkeinheit nicht möglich wäre. Ein Werkstück kann somit schneller und gegebenenfalls präziser hergestellt werden.

Das Verändern der Position durch die erste Ablenkeinheit wird mit einer geringeren Beschleunigung und/oder mit einer geringeren Geschwindigkeit durchgeführt als das Verändern der Position durch die zweite Ablenkeinheit.

Anders ausgedrückt kann der Anteil der zweiten Ablenkeinheit und der Anteil der ersten Ablenkeinheit an einer gesamten Bewegung des Laserstrahls logisch voneinander separiert werden. Der Anteil der zweiten Ablenkeinheit verursacht eine schnellere Bewegung und/oder eine höhere Beschleunigung. Dies kann dadurch ermöglicht werden, dass die zweite Ablenkeinheit erheblich schneller geschaltet werden kann, als die erste Ablenkeinheit (welche beispielsweise durch die Trägheit der mechanischen Bewegung von Spiegeln an einer schnellen Bewegung bzw. hohen Beschleunigung gehindert ist). In einem Beispiel kann die zweite Ablenkeinheit deshalb schneller geschaltet werden, da sie im Gegensatz zu der ersten Ablenkeinheit keine mechanisch beweglichen Komponenten aufweist (insbesondere Spiegel). Im Falle der ersten Ablenkeinheit kann die Massenträgheit der beweglichen Masse der mechanisch beweglichen Komponenten dazu führen, dass die Bewegung einer gewissen Verzögerung unterliegt. Der maximale Strom des verwendeten Netzteils begrenzt hierbei die Beschleunigung.

Die erste Ablenkeinheit kann eine Scan-Einheit umfassen, welche mindestens einen beweglichen Spiegel umfasst, und die zweite Ablenkeinheit kann einen elektrooptischen Ablenker umfassen.

Anders ausgedrückt kann das Merkmal, dass die zweite Ablenkeinheit dazu eingerichtet ist, die Position des Laserstrahls mit einer größeren Beschleunigung abzulenken als eine maximal mögliche Beschleunigung einer Ablenkung durch die erste Ablenkeinheit in einem konkreten Fall dadurch bereitgestellt und verwirklicht werden, dass die erste Ablenkeinheit eine Scan-Einheit umfasst, welche mindestens einen beweglichen Spiegel umfasst, und die zweite Ablenkeinheit einen elektrooptischen Ablenker umfasst.

Die erste Ablenkeinheit kann beispielsweise mindestens zwei bewegliche Spiegel umfassen, sodass der Laserstrahl mithilfe der ersten Ablenkeinheit in zwei Dimensionen (x-Richtung und y-Richtung) über die Rohmaterialschicht bewegt werden kann. Ferner kann die zweite Ablenkeinheit einen oder mehrere elektrooptische Kristalle umfassen. In diesem Fall kann die zweite Ablenkeinheit so ausgestaltet sein, dass sich der Brechungsindex innerhalb des einen oder der mehreren elektrooptischen Kristalle entlang einer oder zweier Achsen durch das Anlegen eines oder zweier elektrischer Felder verändern lässt. Die zweite Ablenkeinheit kann somit dazu geeignet sein, den Laserstrahl in eine oder zwei Richtungen abzulenken (beispielsweise in x-Richtung und y-Richtung bezüglich der Rohmaterialschicht). Die zweite Ablenkeinheit kann beispielsweise zwei hintereinandergeschaltete elektrooptische Kristalle umfassen, wobei einer der beiden Kristalle dazu eingerichtet ist, den Strahl in eine erste zur Strahlausbreitungsrichtung im Wesentlichen senkrechte Richtung (z. B. x-Richtung) abzulenken und wobei der andere der beiden Kristalle dazu eingerichtet ist, den Strahl in eine zweite zur Strahlausbreitungsrichtung im Wesentlichen senkrechte Richtung (z. B. y-Richtung) abzulenken, wobei die zweite Richtung im Wesentlichen senkrecht zur ersten Richtung ist. Der elektrooptische Ablenker kann zusätzlich zu der Möglichkeit, den Laserstrahl in x-Richtung und in y-Richtung abzulenken, dazu geeignet sein, eine Fokusposition des Laserstrahls in z-Richtung zu verändern.

Das Verändern der Position mithilfe der ersten Ablenkeinheit kann einen Vorschub des Laserstrahls in eine erste Richtung bewirken und das Verändern der Position mithilfe der zweiten Ablenkeinheit kann in eine von der ersten Richtung abweichenden zweiten Richtung stattfinden.

Hierbei kann beispielsweise die erste Ablenkeinheit für einen (abschnittsweise) linearen Vorschub sorgen, während die zweite Ablenkeinheit kleinere Bewegungen bzw. kleinere Ablenkungen des Laserstrahls vornimmt, welche von dem (ohne die Ablenkungen der zweiten Ablenkeinheit) linearen Verlauf der ersten Ablenkeinheit abweichen.

Das hin und her Bewegen zwischen den mindestens zwei Schmelzbädern erfolgt mit einer deutlich höheren Beschleunigung (größer als ein Faktor 10 oder beispielsweise größer als ein Faktor 100 oder ein Faktor 1000) als die Bewegung (d. h. insbesondere die Beschleunigung) der Schmelzbäder durch die erste Ablenkeinheit. Dass die Schmelzbäder über die Rohmaterialschicht bewegt werden, kann in der vorliegenden Offenbarung bedeuten, dass der Laserstrahl, welcher für die Erzeugung der Schmelzbäder verantwortlich ist, so bewegt wird, dass mindestens zwei zeitlich kontinuierliche Schmelzbäder aufrechterhalten werden, deren Position sich verändert. Anders ausgedrückt kann der Laserstrahl mithilfe der zweiten Ablenkeinheit zwischen zwei oder mehreren Schmelzbädern hin und her springen und somit diese Schmelzbäder aufrechterhalten.

Der Laserstrahl wird durch das Verändern der Position mithilfe der zweiten Ablenkeinheit so zwischen dem ersten und dem zweiten Schmelzbad hin und her bewegt, dass der Laserstrahl zwischen dem ersten Schmelzbad und dem zweiten Schmelzbad kein Schmelzbad erzeugt.

Bereiche des Rohmaterials, welche der Laserstrahl beim hin und her Bewegen überstreicht, können somit beispielsweise nicht geschmolzen werden (da aufgrund der schnellen Bewegung durch die zweite Ablenkeinheit für ein Aufschmelzen des Rohmaterials nicht genügend Energie eingestrahlt wird, d. h der Laserstrahl zu schnell bewegt wird). Anders ausgedrückt existieren zwischen den aktiven Schmelzbädern Bereiche der Rohmaterialschicht, in welchen kein Schmelzbad existiert.

Gemäß einem nicht erfindungsgemäßen Beispiel kann während des Veränderns der Position mithilfe der zweiten Ablenkeinheit an der aktuellen Position des Laserstrahls durchgehend ein Schmelzbad erzeugt werden. Das Verändern der Position mithilfe der zweiten Ablenkeinheit kann somit auch so langsam erfolgen, dass während dieses Veränderns an der jeweils aktuellen Position des Laserstrahls ein Schmelzbad erzeugt wird.

Gemäß einem nicht erfindungsgemäßen Beispiel kann das Verfahren ferner umfassen Erzeugen eines Schmelzbads während eines Veränderns der Position mithilfe der ersten Ablenkeinheit und/oder mithilfe der zweiten Ablenkeinheit von einem ersten Startpunkt zu einem ersten Endpunkt, Verändern der Position des Laserstrahls von dem ersten Endpunkt zu einem zweiten Startpunkt mithilfe der zweiten Ablenkeinheit, wobei während dieses Veränderns der Position kein Schmelzbad erzeugt wird, und Erzeugen eines Schmelzbads während eines Veränderns der Position mithilfe der ersten Ablenkeinheit und/oder mithilfe der zweiten Ablenkeinheit von dem zweiten Startpunkt zu einem zweiten Endpunkt.

Dass während des Veränderns der Position vom ersten Endpunkt zum zweiten Startpunkt kein Schmelzbad erzeugt wird, kann beispielsweise bedeuten, dass zu dieser Zeit an der aktuellen Position des Laserstrahls kein Schmelzbad erzeugt wird. Der Laserstrahl kann somit ohne (beispielsweise unter Verwendung eines Shutters) ausgeschaltet werden zu müssen von einem ersten Schmelzbad zu einem zweiten Schmelzbad bzw. von einem ersten Scan-Vektor zu einem zweiten Scan-Vektor bewegt werden.

Das Verfahren kann gemäß einem nicht erfindungsgemäßen Beispiel ferner umfassen Verändern der Position des Laserstrahls mithilfe der zweiten Ablenkeinheit gemäß einem vorbestimmten, sich mehrfach wiederholenden geschlossenen Linienmusters, und Bewegen des Linienmusters über die Rohmaterialschicht entlang einer vorbestimmten Richtung mithilfe der ersten Ablenkeinheit.

Das geschlossene Linienmuster kann somit eine Wobbel-Bewegung durchführen, welche der durch die Scanner-Einheit verursachten Bewegung überlagert ist. Somit kann beispielsweise eine aktuelle Größe eines Schmelzpools erhöht werden. Dass das Linienmuster über die Rohmaterialschicht bewegt wird, bedeutet mit anderen Worten, dass der Laserstrahl so über die Rohmaterialschicht bewegt wird, dass das geschlossene Linienmuster nicht an Ort und Stelle verweilt, sondern über die Rohmaterialschicht bewegt wird. Das geschlossene Linienmuster ist somit insofern geschlossen als es bei ausbleibender Bewegung der ersten Ablenkeinheit (bzw. bezüglich eines Koordinatensystems, welches mit der Bewegung der ersten Ablenkeinheit mitwandert) ein geschlossenes Muster darstellt.

Das geschlossene Linienmuster kann eines der folgenden Muster umfassen: einen Kreis, eine Ellipse, eine gerade Linie, eine Acht. Die gerade Linie entspricht hierbei einer hin und her Bewegung in einer Dimension.

Das Verfahren kann gemäß einem nicht erfindungsgemäßen Beispiel ferner ein Ansteuern der zweiten Ablenkeinheit zum Ausgleich eines Schleppverzugs der ersten Ablenkeinheit umfassen. Ein Schleppverzug der ersten Ablenkeinheit kann bedeuten, dass eine durch eine Ablenkung der ersten Ablenkeinheit verursachte Ist-Position des Laserstrahls von einer Soll-Position abweicht. Die Soll-Position kann hierbei von einer Steuereinheit durch entsprechende Steuersignale vorgegeben sein. Der Schleppverzug kann insbesondere durch eine Masseträgheit von Spiegeln (insbesondere Galvanometerspiegeln) der ersten Ablenkeinheit verursacht werden. Der Ausgleich des Schleppverzugs durch die zweite Ablenkeinheit kann dadurch bewerkstelligt werden, dass die zweite Ablenkeinheit eine Ablenkung des Laserstrahls durchführt, welche dazu führt, dass die Kombination bzw. Überlagerung der Ablenkungen durch die erste Ablenkeinheit und die zweite Ablenkeinheit eine Position des Laserstrahls zur Folge hat, welche einer Soll-Position entspricht.

Das oben geschilderte Verfahren zum Ausgleich des Schleppverzugs kann den Vorteil haben, dass Verzögerungszeiten ("Delays"), welche aus dem Stand der Technik bekannt sind, weggelassen oder reduziert werden können, da das Ansteuern der zweiten Ablenkeinheit gleichzeitig zu einer Bewegung der ersten Ablenkeinheit durchgeführt werden kann.

Das Verfahren kann gemäß einem nicht erfindungsgemäßen Beispiel ferner umfassen: a) Ansteuern der ersten Ablenkeinheit zum Durchführen einer Ablenkung des Laserstrahls in eine erste Richtung; b) Ansteuern der ersten Ablenkeinheit zum Durchführen einer Ablenkung des Laserstrahls in eine zweite Richtung, welche von der ersten Richtung abweicht; und c) gleichzeitig zu Schritt b): Ansteuern der zweiten Ablenkeinheit zum Durchführen einer Kompensationsablenkung, um einen Schleppverzug der ersten Ablenkeinheit zu kompensieren.

Hierbei kann die erste Richtung einer linearen Richtung parallel zu einer obersten Rohmaterialschicht entsprechen (z. B. y-Richtung). Die zweite Richtung kann beispielsweise eine im Wesentlichen senkrecht zur ersten Richtung verlaufende Richtung parallel zur obersten Rohmaterialschicht entsprechen (z. B. x-Richtung).

Die Erfindung betrifft gemäß einem zweiten Aspekt eine Vorrichtung zum Herstellen eines dreidimensionalen Werkstücks. Die Vorrichtung umfasst einen Träger zum Aufnehmen mindestens einer Rohmaterialschicht, eine Bestrahlungseinheit zum Bestrahlen der Rohmaterialschicht mit einem Laserstrahl, sodass an einer Stelle, an der der Laserstrahl auf die Rohmaterialschicht trifft, ein Schmelzbad erzeugt wird, eine erste Ablenkeinheit zum Verändern einer Position des Laserstrahls auf der Rohmaterialschicht, eine zweite Ablenkeinheit zum Verändern der Position des Laserstrahls auf der Rohmaterialschicht, und eine Steuereinheit zum Steuern von zumindest der ersten Ablenkeinheit und der zweiten Ablenkeinheit. Die zweite Ablenkeinheit ist dazu eingerichtet, die Position des Laserstrahls mit einer größeren Beschleunigung abzulenken als eine maximal mögliche Beschleunigung einer Ablenkung durch die erste Ablenkeinheit. Die Steuereinheit ist dazu eingerichtet, die erste Ablenkeinheit und die zweite Ablenkeinheit so zu steuern, dass mindestens ein erstes Schmelzbad und ein zweites Schmelzbad erzeugt werden. Der Laserstrahl wird durch das Verändern der Position mithilfe der zweiten Ablenkeinheit zwischen dem ersten Schmelzbad und dem zweiten Schmelzbad hin und her bewegt, wobei das erste Schmelzbad und das zweite Schmelzbad zeitlich kontinuierlich aufrechterhalten werden und durch das Verändern der Position mithilfe der ersten Ablenkeinheit über die Rohmaterialschicht bewegt werden. Der Laserstrahl wird durch das Verändern der Position mithilfe der zweiten Ablenkeinheit mit einer Beschleunigung, die mehr als ein Faktor 10 größer ist als die einer Bewegung des ersten Schmelzbads und des zweiten Schmelzbads durch die erste Ablenkeinheit, so zwischen dem ersten und dem zweiten Schmelzbad hin und her bewegt, dass der Laserstrahl zwischen dem ersten Schmelzbad und dem zweiten Schmelzbad kein Schmelzbad erzeugt.

Sämtliche der oben hinsichtlich des Verfahrens des ersten Aspekts diskutierten Details können auch auf die Vorrichtung des zweiten Aspekts zutreffen bzw. angewendet werden.

Die Steuereinheit ist dazu eingerichtet, die erste Ablenkeinheit und die zweite Ablenkeinheit so zu steuern, dass das Verändern der Position durch die erste Ablenkeinheit mit einer geringeren Beschleunigung und/oder mit einer geringeren Geschwindigkeit durchgeführt wird als das Verändern der Position durch die zweite Ablenkeinheit.

Die erste Ablenkeinheit kann eine Scan-Einheit umfassen, welche mindestens einen beweglichen Spiegel umfasst, und die zweite Ablenkeinheit kann einen elektrooptischen Ablenker umfassen.

Die Steuereinheit kann dazu eingerichtet sein, die erste Ablenkeinheit und die zweite Ablenkeinheit so zu steuern, dass das Verändern der Position mithilfe der ersten Ablenkeinheit einen Vorschub des Laserstrahls in eine erste Richtung bewirkt und dass das Verändern der Position mithilfe der zweiten Ablenkeinheit in eine von der ersten Richtung abweichenden zweiten Richtung stattfindet.

Eine Ansteuerung der ersten Ablenkeinheit und der zweiten Ablenkeinheit zur Erzeugung bzw. nicht-Erzeugung eines Schmelzbads kann so erfolgen, dass der Laserstrahl an einem Ort, an dem ein Schmelzbad erzeugt werden soll, deutlich länger verweilt bzw. deutlich langsamer bewegt wird als an einem Ort, an dem kein Schmelzbad erzeugt werden soll (Geschwindigkeit beispielsweise größer als Faktor 10, Faktor 100 oder Faktor 1000). Hierbei kann davon ausgegangen werden, dass der Fachmann entsprechende zeitliche Abläufe auf Grundlage der Eigenschaften des eingesetzten Lasers bzw. des verwendeten Rohmaterials problemlos einstellen kann.

Die Erfindung wird im Folgenden anhand der beigefügten Figuren erläutert. Es stellen dar:
- Figur 1:: eine schematische Seitenansicht einer erfindungsgemäßen Vorrichtung, die ein erfindungsgemäßes Verfahren ausführt;
- Figur 2:: eine schematische Aufsicht zur Darstellung eines Verfahrens, bei dem der Laserstrahl mithilfe der zweiten Ablenkeinheit zwischen mehreren Schmelzbädern hin und her springt;
- Figur 3:: eine schematische Aufsicht zur Darstellung eines Verfahrens, bei dem der Laserstrahl mithilfe der zweiten Ablenkeinheit lediglich entlang einer Richtung abgelenkt wird;
- Figur 4:: eine schematische Aufsicht zur Darstellung eines Verfahrens, bei dem der Laserstrahl mithilfe der zweiten Ablenkeinheit ohne Erzeugung eines Schmelzbads von einem ersten Scanvektor zu einem zweiten Scanvektor springt;
- Figur 5:: eine schematische Aufsicht zur Darstellung vier unterschiedlicher beispielhafter Verfahren, wobei der Laserstrahl mithilfe der zweiten Ablenkeinheit eine geschlossene Linienform abfährt (Wobbeln) und mithilfe der ersten Ablenkeinheit linear bewegt wird; und
- Figur 6: eine schematische Aufsicht zur Darstellung eines Verfahrens, wie ein Schleppverzug der ersten Ablenkeinheit durch eine Kompensationsablenkung der zweiten Ablenkeinheit kompensiert werden kann.

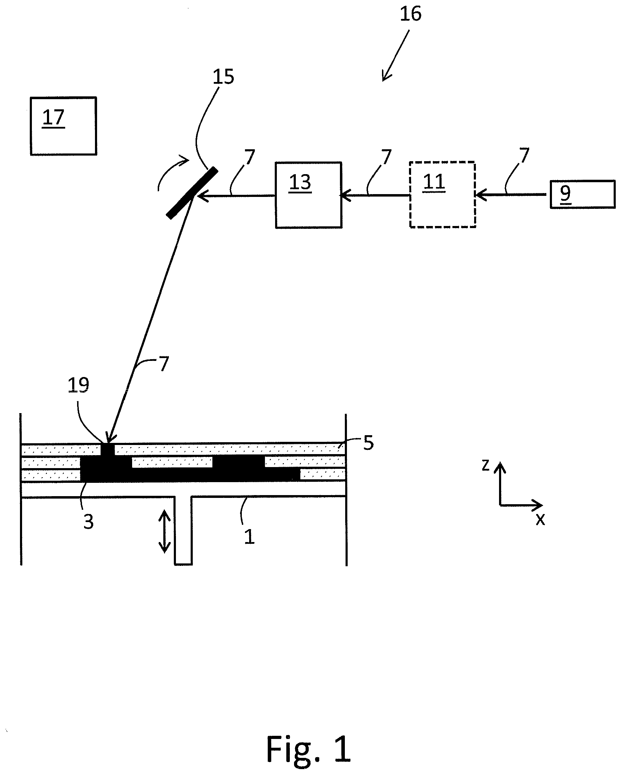

In Fig. 1 wird ein Ausführungsbeispiel einer erfindungsgemäßen Vorrichtung in einer schematischen Seitenansicht dargestellt. Die Ansichten der Figuren sind nicht notwendigerweise maßstabsgetreu. Eine vertikale Richtung wird in Fig. 1 durch die z-Richtung definiert und eine horizontale Ebene (im Folgenden auch x-y-Ebene) erstreckt sich senkrecht zur Zeichenebene entlang eines Trägers 1 der Vorrichtung.

Im Rahmen eines Herstellungsprozesses eines Werkstücks 3 werden auf den Träger 1 von einer Rohmaterialauftragsvorrichtung (beispielsweise eine Pulverauftragsvorrichtung, nicht dargestellt) zunächst eine erste Schicht 5 von Rohmaterial (beispielsweise Rohmaterialpulver) aufgetragen. Hierbei erstreckt sich diese erste Rohmaterialschicht 5 sowie folgende Rohmaterialschichten 5 entlang der x-y-Ebene. Nachdem die erste Rohmaterialschicht 5 aufgetragen wurde, wird diese (oberste) Schicht 5 von einem Laserstrahl 7 selektiv so bestrahlt, dass sich das Rohmaterial an den bestrahlten Stellen miteinander verbindet und somit verfestigt wird. Dies kann beispielsweise durch Verschmelzen oder Versintern geschehen. An einem Ort, wo der Laserstrahl 7 für ausreichend lange Zeit das Rohmaterial bestrahlt, entsteht somit ein Schmelzbad, in dem das Rohmaterial verschmolzen oder versintert wird.

Nach dem erfolgreichen Belichten und Verfestigen der gewünschten Bereiche der jeweiligen Rohmaterialschicht 5 wird der Träger 1 nach unten bewegt und eine nächste Rohmaterialschicht 5 wird auf die vorherige Rohmaterialschicht 5 aufgetragen und wiederum selektiv verfestigt. Die obigen Schritte werden wiederholt und somit kann Schicht für Schicht das Werkstück 3 aufgebaut werden.

Die Vorrichtung umfasst eine Laserstrahlquelle 9, welche dazu geeignet ist den Laserstrahl 7 mit geeigneter Wellenlänge und Energie zur Verfestigung des verwendeten Rohmaterials zu erzeugen. Nach seiner Erzeugung durch die Laserstrahlquelle 9 durchläuft der Laserstrahl 7 eine optionale Fokussier-Einheit 11. Mithilfe der Fokussier-Einheit 11 kann auf bekannte Weise eine Fokusposition des Laserstrahls 7 entlang der Strahlachse (d. h. im Wesentlichen entlang der z-Richtung) verändert werden. Die Fokussier-Einheit 11 ist insofern optional, als diese auch weggelassen werden kann oder in die später beschriebene Scan-Einheit 15 oder in den später beschriebenen elektrooptischen Ablenker 13 integriert sein kann.

Im Strahlengang des Laserstrahls 7 strahlabwärts von der Fokussier-Einheit 11 ist ein elektrooptischer Ablenker 13 angeordnet, welchen der Laserstrahl 7 passiert. Der elektrooptische Ablenker 13 ist dazu eingerichtet, den Laserstrahl 7 entlang zumindest einer Dimension (d. h. entlang zumindest einer Richtung) in Abhängigkeit von einem Steuersignal (der später beschriebenen Steuereinheit 17) abzulenken. Hierfür weist der elektrooptische Ablenker 13 mindestens einen elektrooptischen Kristall (bzw. optischen Kristall) auf. Der elektrooptische Kristall kann beispielsweise aus KTN (Kalium Tantal Niobat) bestehen. Ein besonderer Vorteil bei der Verwendung von KTN liegt in einer vergleichsweise hohen Änderung des Brechungsindex bei Anlegen einer Spannung an den Kristall. Andere Materialien wie beispielsweise Lithiumniobat (LN) oder Bariumtitanat (BT) sind ebenfalls denkbar.

Das grundsätzliche Prinzip des elektrooptischen Ablenkers 13 ist dem Fachmann bekannt. Die Strahlablenkung im optischen Kristall des Strahlablenkers 13 basiert auf einer Änderung der Brechzahl n bei Anlegen eines elektrischen Felds durch den nichtlinearen Kerr-Effekt, der quadratisch von der elektrischen Feldstärke und damit der an den optischen Kristall angelegten elektrischen Spannung abhängt. Für Details siehe z. B. Thorsten Ledig, Peter Bechtold: "Schnelle Laserscans mithilfe von KTN-Kristallen", wobei die darin beschriebenen Prinzipien eines elektrooptischen Ablenkers auf den elektrooptischen Ablenker 13 der vorliegenden Offenbarung angewendet werden können.

Somit kann der Laserstrahl 7 durch Anlegen einer Spannung an Elektroden des elektrooptischen Ablenkers 13 in zumindest eine Richtung (senkrecht zur Strahlachse des Laserstrahls 7) abgelenkt werden. Hierbei ist der Ablenkungswinkel abhängig von der Höhe der angelegten Spannung. Nach der Umlenkung des Laserstrahls 7 durch die später geschilderte Scan-Einheit 15 führt die Ablenkung des elektrooptischen Ablenkers 13 zu einer Ablenkung des Laserstrahls 7 in mindestens einer Richtung der x-y-Ebene, also in der Ebene der obersten Rohmaterialschicht 5.

Um eine Ablenkbarkeit in zwei Dimensionen (d. h. sowohl in x-Richtung als auch in y-Richtung) zu gewährleisten, kann der elektrooptische Ablenker 13 zwei hintereinandergeschaltete optische Kristalle umfassen (einen ersten optischen Kristall und einen zweiten optischen Kristall), wobei das im ersten optischen Kristall erzeugte elektrische Feld senkrecht zur Strahlachse des Laserstrahls 7 steht. Das im zweiten optischen Kristall erzeugte elektrische Feld steht ebenfalls senkrecht zur Strahlachse des Laserstrahls 7 und senkrecht zu dem elektrischen Feld des ersten optischen Kristalls. Anders ausgedrückt können entsprechende Elektroden vorgesehen sein, um die oben geschilderten elektrischen Felder zu erzeugen, welche um 90° zueinander gedreht angeordnet sind. Durch die oben geschilderte Anordnung kann beispielsweise durch den ersten optischen Kristall eine Ablenkung in eine erste Richtung (beispielsweise x-Richtung der Ebene der Rohmaterialschicht 5) gewährleistet werden und durch den zweiten optischen Kristall eine Ablenkung in eine dazu senkrechte zweite Richtung (beispielsweise y-Richtung der Ebene der Rohmaterialschicht 5).

Bei entsprechender Ansteuerung durch eine später beschriebene Steuereinheit 17 kann somit eine Position des Laserstrahls 7 auf der Rohmaterialschicht 5 festgelegt und angepasst werden. Ein Vorteil der Verwendung eines elektrooptischen Ablenkers 13 (beispielsweise im Vergleich zu einem elektroakustischen Ablenker oder im Vergleich zu der Scan-Einheit 15) besteht darin, dass eine Schaltzeit des elektrooptischen Ablenkers 13 sehr kurz ist und sich die Position des Laserstrahls 7 somit sehr schnell verändern lässt (ggf. ohne dabei ein Schmelzbad zu erzeugen).

Zusätzlich zu einer Änderung der Position des Laserstrahls 7 in der x-y-Ebene kann optional von dem elektrooptischen Ablenker 13 auch eine Änderung der Fokusposition entlang der Strahlachse des Laserstrahls 7 vorgenommen werden, wenn ein elektrooptischer Kristall mit entsprechender Elektrodenanordnung vorgesehen ist, siehe beispielsweise Tadayuki Imai, Shogo Yagi, Seiji Toyoda, Masahiro Sasaura: "Fast Varifocal Lenses Based on KTa1-xNbxO3 (KTN) Single Crystals". Auf diese Weise kann beispielsweise eine Fokussier-Einheit in den elektrooptischen Ablenker 13 integriert werden.

Die Vorrichtung umfasst ferner eine Scan-Einheit 15, welche im Strahlengang des Laserstrahls 7 hinter dem elektrooptischen Ablenker 13 angeordnet ist. Die Scan-Einheit 15 umfasst auf gewohnte Weise mindestens einen beweglichen Spiegel, mithilfe dessen die Position des Laserstrahls 7 auf der obersten Rohmaterialschicht 5 (d. h. in der x-y-Ebene) verändert werden kann. Vorzugsweise sind mindestens zwei bewegliche Spiegel vorgesehen oder ein beweglicher Spiegel ist in mindestens zwei Richtungen bewegbar (bzw. um mindestens zwei gekreuzte Achsen rotierbar), sodass der Laserstrahl 7 sowohl in x-Richtung als auch in y-Richtung bewegt werden kann. Die durch die Scan-Einheit 15 verursachte Änderung der Position des Laserstrahls 7 in der x-y-Ebene erfolgt aufgrund der mechanischen Trägheit des Spiegels bzw. der Spiegel der Scan-Einheit 15 deutlich langsamer als eine schnellstmögliche Veränderung der Position mithilfe des elektrooptischen Ablenkers 13. Es ist jedoch möglich, mit der Scan-Einheit 15 einen größeren Bereich der Fläche der obersten Rohmaterialschicht 5 zu erreichen als lediglich mit dem elektrooptischen Ablenker 13. Anders ausgedrückt können mit der Scan-Einheit 15 größere Ablenkungswinkel des Laserstrahls 7 erreicht werden als mit dem elektrooptischen Ablenker 13.

Eine Kombination aus elektrooptischem Ablenker 13 und Scan-Einheit 15 kann somit den Vorteil haben, dass schnelle Ablenkungen des Laserstrahls 7 möglich sind, ohne dass Abstriche hinsichtlich der erreichbaren Fläche der Rohmaterialschicht 5 gemacht werden müssen.

Die Anordnung der Scan-Einheit 15 und des elektrooptischen Ablenkers 13 kann jedoch auch umgekehrt sein, sodass der elektrooptische Ablenker 13 im Strahlengang hinter der Scan-Einheit 15 angeordnet ist. Die oben geschilderten Elemente Fokussier-Einheit 11, elektrooptischer Ablenker 13 und Scan-Einheit 15 sind Teil einer Bestrahlungseinheit 16.

Die Vorrichtung umfasst ferner eine Steuereinheit 17. Die Steuereinheit 17 ist dazu eingerichtet, zumindest die Funktionen (d. h. die Bewegungsabläufe) des elektrooptischen Ablenkers 13 und der Scan-Einheit 15 zu steuern. Ferner kann die Steuereinheit 17 zur Steuerung der Laserstrahlquelle 9, der Fokussier-Einheit 11, des beweglichen Trägers 1 sowie der Rohmaterialauftragsvorrichtung dienen. Bei der Steuereinheit 17 kann es sich somit um eine allgemeine Steuereinheit der Vorrichtung handeln. Die Steuereinheit 17 umfasst einen Prozessor und einen Speicher. Auf dem Speicher sind Befehle gespeichert, welche den Prozessor dazu veranlassen, zumindest ein Verfahren gemäß der vorliegenden Offenbarung durchzuführen. Die Befehle können beispielsweise in Form eines Programms bzw. eines Programmablaufs gespeichert sein. Genauer gesagt veranlassen die Befehle den Prozessor dazu, zumindest den elektrooptischen Ablenker 13 und die Scan-Einheit 15 gemäß einem vorbestimmten Ablauf anzusteuern. Beispiele für diesen vorbestimmten Ablauf bzw. für das resultierende Verfahren werden in Zusammenhang mit den folgenden Figuren beschrieben.

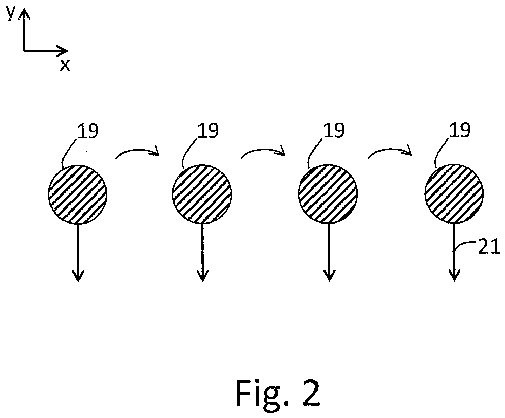

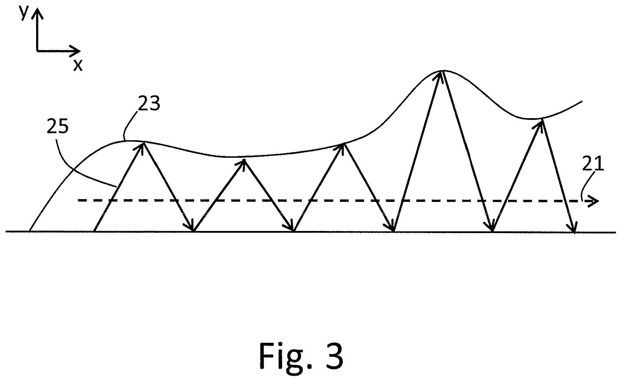

Bei den im Folgenden vorgestellten Verfahren der Figuren 2 bis 6 handelt es sich lediglich bei dem Verfahren der Fig. 2 um ein Ausführungsbeispiel der vorliegenden Erfindung, während die Beispiele der Figuren 3 bis 6 dem Verständnis der vorliegenden Erfindung dienen.

Fig. 2 zeigt ein Verfahren, bei dem mehrere Schmelzbäder "offen" bzw. aktiv gehalten werden können. Anders ausgedrückt findet eine "Quasi-Strahlteilung" des Laserstrahls 7 mithilfe des elektrooptischen Ablenkers 13 statt. In Fig. 2 sind nebeneinander (in x-Richtung) vier Schmelzbäder 19 dargestellt. Eine Bewegung bzw. eine Veränderung der Position des Laserstrahls 7 auf der Rohmaterialschicht 5 mithilfe des elektrooptischen Ablenkers 13 sowie der Scan-Einheit 15 findet wie folgt statt. Die Scan-Einheit 15 sorgt für einen linearen Vorschub 21, beispielsweise in Y-Richtung, wie in Fig. 2 dargestellt ist. Der Vorschub 21 muss jedoch nicht zwangsläufig linear sein, sondern kann auch einem anderen beliebigen Verlauf folgen. Während des Vorschubs 21 in y-Richtung mithilfe der Scan-Einheit 15 führt der elektrooptische Ablenker 13 eine deutlich schnellere Veränderung der Position des Laserstrahls 7 von einem Schmelzbad 19 zum anderen Schmelzbad 19 durch. Beispielsweise kann der Laserstrahl 7 innerhalb von ca. 1 µs vom Schmelzbad 19 ganz links zum zweiten Schmelzbad 19 von links (siehe Fig. 2) springen, wo der Laserstrahl 7 dann für eine Zeit verweilt (bzw. langsam durch die Scan-Einheit 15 bewegt wird), welche deutlich länger ist als die für den Sprung benötigte Zeit (beispielsweise größer als ein Faktor 10, Faktor 100 oder Faktor 1000). Anschließend wird der Laserstrahl 7 vom zweiten Schmelzbad 19 innerhalb von ca. 1 µs zum dritten Schmelzbad 19 mithilfe des elektrooptischen Ablenkers 13 bewegt, wo er wiederum für eine gewisse Zeit verweilt. Dieser Vorgang wird bis zum letzten (rechten) Schmelzbad wiederholt, von wo aus der Laserstrahl 7 anschließend wieder entweder zum ersten Schmelzbad 19 oder zum dritten Schmelzbad 19 zurückspringen kann.

Durch das oben geschilderte Verfahren kann gewährleistet werden, dass mehrere Schmelzbäder 19 gleichzeitig (im Beispiel der Fig. 2 vier Schmelzbäder) aufrechterhalten werden können, d. h. dass sich das Rohmaterial im Bereich der Schmelzbäder 19 zeitlich durchgehend in einem geschmolzenen Zustand befindet. Somit kann unter Verwendung einer einzigen Laserstrahlquelle 9 und ohne echte Aufteilung des Laserstrahls 7 eine Quasi-Aufteilung des Laserstrahls 7 erreicht werden, sodass in der Rohmaterialschicht 5 mehrere Schmelzbäder 19 gleichzeitig erzeugt und bewegt werden können.

Für das oben geschilderte Verfahren ist eine Bewegung in lediglich eine Richtung (x-Richtung) ausreichend, wobei die Schmelzbäder 19 jedoch beliebig angeordnet sein können (beispielsweise auch in zwei Dimensionen, zum Beispiel in Form eines Rechtecks oder einer Raute). Ferner können während des Bauprozesses einzelne Schmelzbäder 19 hinzu- oder abgeschaltet werden. Auch ist eine Veränderung der Anordnung der Schmelzbäder 19 (zum Beispiel eine Veränderung der jeweiligen Abstände zueinander) während des Bauprozesses möglich.

Die Anzahl und/oder Anordnung der Schmelzbäder 19 kann beispielsweise während eines Bauprozesses so gesteuert werden, dass ein innerer Kernbereich des Werkstücks schnell bearbeitet wird (z. B. mit mehreren gleichzeitig aufrechterhaltenen Schmelzbädern 19) und ein äußerer Hüllenbereich langsamer und mit höherer Präzision bearbeitet wird (z. B. dadurch, dass lediglich ein Schmelzbad 19 verwendet wird).

Auf die oben geschilderte Weise kann effektiv eine große Fläche der Rohmaterialschicht in kurzer Zeit verfestigt werden, wobei flexibel auf Änderungen der zu verfestigenden Form reagiert werden kann.

Fig. 3 zeigt ein weiteres Verfahren gemäß der vorliegenden Offenbarung, mithilfe dessen eine Kontur 23 eines Werkstücks 3 präzise gebildet werden kann. Gemäß dem Verfahren der Fig. 3 sorgt die Scan-Einheit 15 für einen linearen Vorschub 21 in x-Richtung. Dieser durch die Scan-Einheit 15 verursachte Vorschub 21 muss jedoch nicht linear sein, sondern kann jede beliebige Form annehmen. Gleichzeitig führt der Laserstrahl 7, abgelenkt durch den elektrooptischen Ablenker 13, eine hin und her Bewegung in Richtung der y-Achse durch, was in Kombination mit dem Vorschub 21 der Scan-Einheit 15 zu einer Zickzack-Bewegung 25 des Laserstrahls 7 auf der Rohmaterialschicht 5 führt.

Die Gesamtbewegung des Laserstrahls 7 erfolgt langsam genug, dass ein Schmelzbad 19 zeitlich durchgehend aufrechterhalten wird.

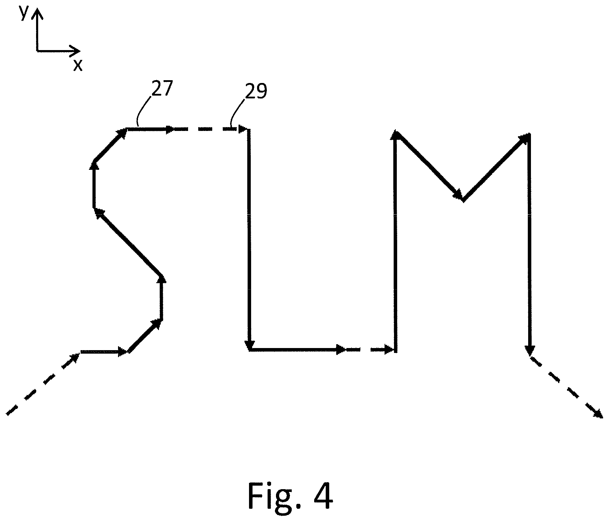

Figur 4 zeigt eine Möglichkeit, wie ein komplexes Linienmuster mit Unterbrechungen verfestigt werden kann, ohne dass dabei die Laserstrahlquelle 9 (beispielsweise mithilfe eines Shutters) ausgeschaltet werden muss. Die durchgehenden Abschnitte 27 werden dabei so bestrahlt, dass eine Bewegung des Laserstrahls 7 über diese Abschnitte 27 so langsam stattfindet, dass ein Schmelzbad 19 aufrechterhalten wird und somit eine durchgehende Linie verfestigt wird. Andererseits werden die gestrichelt eingezeichneten Abschnitte 29 mithilfe des elektrooptischen Ablenkers 13 so schnell überstrichen, dass in diesen Bereichen kein Schmelzbad erzeugt wird. Das Verfahren kann beispielsweise so durchgeführt werden, dass die Bewegung des Laserstrahls 7 über die Abschnitte 27 mithilfe der Scan-Einheit 15 und/oder mithilfe des elektrooptischen Ablenkers 13 durchgeführt werden. Die Bewegung über die Abschnitte 29 wird jedoch mithilfe des elektrooptischen Ablenkers 13 durchgeführt, da dieser eine entsprechend schnelle Ablenkung und insbesondere eine Ablenkung mit hoher Beschleunigung ermöglicht, sodass die Ablenkung über diese Abschnitte 29 in kurzer Zeit durchgeführt werden kann. Es wird somit in den Abschnitten 27 jeweils von einem Startpunkt zu einem Endpunkt ein Schmelzbad 19 erzeugt und anschließend ohne Erzeugung eines Schmelzbads zu einem weiteren Startpunkt gesprungen, von welchem ausgehend wiederum ein Schmelzbad erzeugt wird.

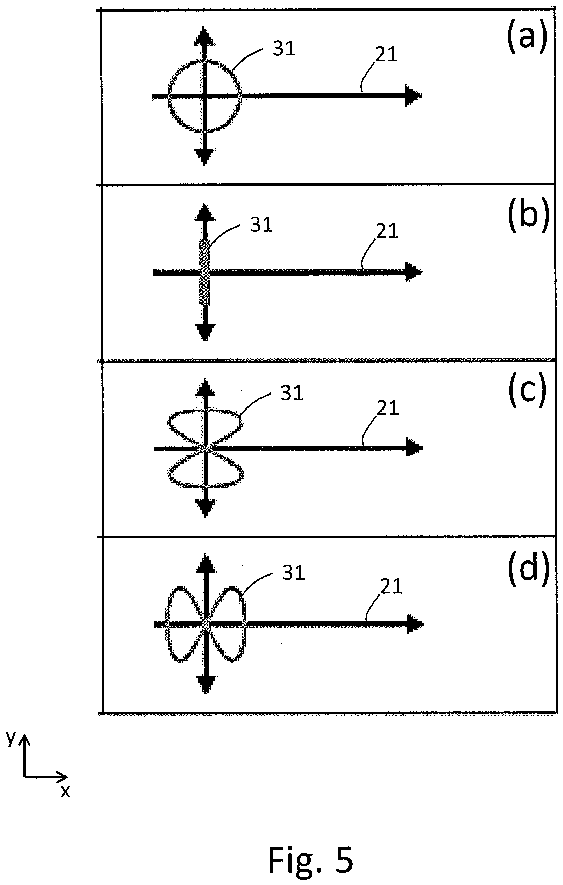

Fig. 5 zeigt in den Abschnitten (a) bis (d) vier exemplarische Möglichkeiten, wie durch Wobbling ein effektiver Durchmesser des Laserstrahls 7 vergrößert werden kann bzw. wie eine verfestigte Fläche an Rohmaterial vergrößert werden kann. Hierbei führt wiederum die Scan-Einheit 15 einen Vorschub 21 durch, welcher in Fig. 5 beispielhaft als linearer Vorschub 21 dargestellt ist. Die Scan-Einheit 15 kann jedoch eine beliebige Vorschubbewegung durchführen. Insbesondere muss der Vorschub 21 keiner linearen Trajektorie folgen, sondern kann einen beliebigen Scan-Pfad abfahren, beispielsweise einen gekrümmten Pfad mit Radius r.

Der Vorschubbewegung sozusagen überlagert ist eine durch den elektrooptischen Ablenker 13 verursachte Wobbel-Bewegung des Laserstrahls 7 in Form eines geschlossenen Linienmusters 31. Dieses geschlossene Linienmuster 31 wird jedoch durch den Vorschub 21 über die Rohmaterialschicht 5 bewegt, sodass entsprechend ein Schmelzbad erzeugt wird und das Rohmaterial verschmolzen oder versintert wird.

Im Falle des Beispiels aus Abschnitt (a) handelt es sich bei dem geschlossenen Linienmuster 31 um einen Kreis. Abschnitt (b) zeigt als geschlossenes Linienmuster 31 eine gerade Linie, welche auf und ab verfahren wird. Die Abschnitte (c) und (d) zeigen jeweils als geschlossenes Linienmuster 31 eine Acht, welche jedoch jeweils entlang unterschiedlicher Symmetrieachsen der Acht bewegt wird. Die in den obigen Beispielen erwähnten Linienmuster sind lediglich Beispiele und es können beliebige andere (sich wiederholende oder sogar zufällige) Muster für die Ablenkung durch den elektrooptischen Ablenker 13 verwendet werden.

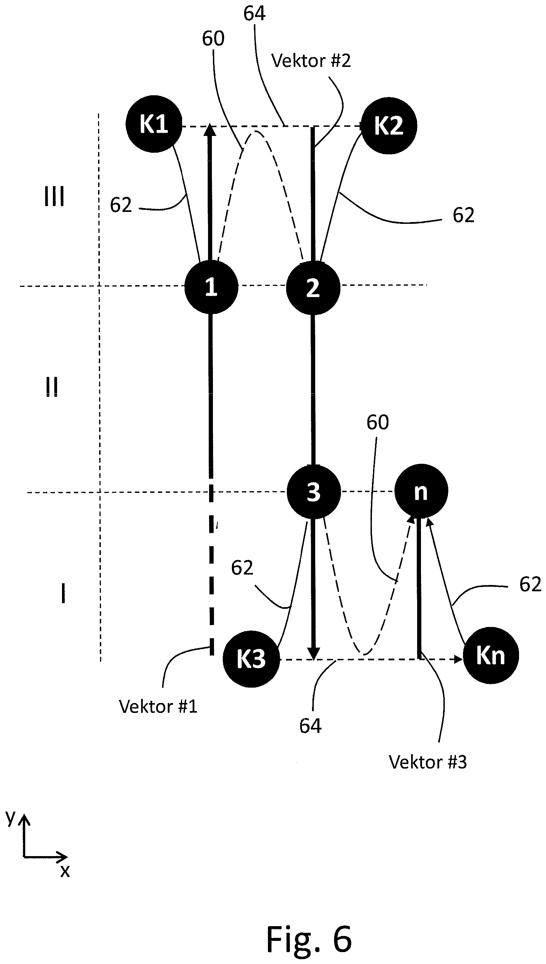

Im Folgenden wird anhand der Fig. 6 beschrieben, wie mithilfe der hierin beschriebenen Technik (d. h. beispielsweise mithilfe der Vorrichtung aus Fig. 1) ein Schleppverzug der ersten Ablenkeinheit durch geeignetes Ansteuern der zweiten Ablenkeinheit kompensiert werden kann. Wie bereits im Zusammenhang mit Fig. 1 beschrieben, umfasst in einem Ausführungsbeispiel die erste Ablenkeinheit eine Scan-Einheit 15 mit einem oder mehreren Galvanometerspiegeln und die zweite Ablenkeinheit umfasst einen elektrooptischen Ablenker 13. Genauer gesagt umfasst in einem Ausführungsbeispiel die erste Ablenkeinheit eine Scan-Einheit 15 (bzw. einen Galvanometer-Scanner) mit zwei Spiegelkomponenten zur Laserstrahlablenkung. Diese wiederum besitzen eine Masse und somit auch eine Massenträgheit bzw. ein Massenträgheitsmoment. Die mechanisch bewegten Galvanometerspiegeln benötigen somit eine gewisse Zeit, um nach einem entsprechenden Steuersignal auf die geforderte Geschwindigkeit zu beschleunigen. Dies führt letztendlich zu einem Schleppverzug, wobei es sich bei dem Schleppverzug um einen im Bereich der Lasertechnik und der Lasermaterialbearbeitung bekannten Begriff und um ein bekanntes Problem handelt. Kurz gesagt führt der Schleppverzug dazu, dass die tatsächliche Position des Laserstrahls der (durch die Ansteuerung vorgegebenen) Soll-Position hinterher hängt bzw. "schleppt". Allgemein gesagt kann gesagt werden, dass aufgrund des Schleppverzugs die Ist-Position des Laserstrahls von der Soll-Position des Laserstrahls abweicht.

Das oben geschilderte Problem des Schleppverzugs kann beispielsweise durch Einführen geeigneter Verzögerungszeiten zumindest teilweise kompensiert werden. Jump-Delay und Mark-Delay sind bekannte Maßnahmen, um mechanisches Überschwingen auszugleichen. Dies geschieht dadurch, dass man Wartezeiten ("Delays") einführt und somit sicherstellt, nicht mehr in der Einschwingzone der Scan-Einheit zu arbeiten.

In Figur 6 ist gezeigt, wie die zweite Ablenkeinheit (im vorliegenden Ausführungsbeispiel in Form eines elektrooptischen Ablenkers 13) dazu verwendet werden kann, einen Schleppverzug der ersten Ablenkeinheit (Scan-Einheit 15) zu kompensieren.

Die dick eingezeichneten Linien und Pfeile in Figur 6 (Vektor #1, Vektor #2 und Vektor #3) zeigen die tatsächliche (korrigierte) Scantrajektorie, also die Bahn, die der Laser tatsächlich auf der Rohmaterialschicht abfährt. Die dünnen gestrichelten Linien 60 beschreiben Sprungbewegungen der Scan-Einheit 15, welche einen Schleppverzug aufweisen. Die dünnen durchgezogenen Linien 62 beschreiben Kompensationsablenkungen des elektrooptischen Ablenkers 13. Wenn die Sprungbewegung 60 der Scan-Einheit 15 mit der Kompensationsablenkung 62 des elektrooptischen Ablenkers 13 überlagert und kombiniert wird, so führt dies zu den geraden Scan-Vektoren, welche in Figur 6 dargestellt sind. Die römischen Ziffern I, II und III, welche in Fig. 6 gezeigt sind, beschreiben unterschiedliche Teilbereiche des Scan-Ablaufs, welcher im Folgenden beschrieben wird.

In Teilbereich I wird der Scanvorgang des Vektors #1 gestartet. Die Trajektorie wird durch die Scan-Einheit 15 beschrieben, wobei der elektrooptische Ablenker 13 nicht wirksam ist. Die dicke Linie des Vektors #1 ist in Teilbereich I gestrichelt dargestellt, da dieser Vorgang in diesem Beispiel initial abläuft.

Der Teilbereich II ist identisch zu Teilbereich I, bis zu dem Zeitpunkt, an dem der Übergabepunkt 1 (schwarzer Kreis "1" in Figur 6) erreicht wird. Die Definition für Übergabepunkt 1, sowohl zeitlich als auch örtlich, ergibt sich aus der Performance der Scan-Einheit 15 (Beschleunigung führt zu bestimmten Delay-Zeiten). An diesem Punkt leitet die Scan-Einheit 15 eine Bewegung in Richtung des Vektors #2 ein. Diese eingeleitete Ausholbewegung 60 der Scan-Einheit 15 wird durch eine entsprechende Gegenbewegung bzw. Kompensationsablenkung 62 des elektrooptischen Ablenkers 13 kompensiert.

In Teilbereich III wird durch die in Teilbereich II eingeleitete Bewegung die Scantrajektorie beschrieben, welche aus der Kombination der Ablenkungen der Scan-Einheit 15 und des elektrooptischen Ablenkers 13 resultiert. Dies führt zu den in Fig. 6 dargestellten geraden linienförmigen Abschnitten der Vektoren #1 und #2.

Das Erreichen des Endpunktes von Vektor #1 bedeutet für den elektrooptischen Ablenker 13 das Erreichen des Endpunktes K1 seiner Kompensationsbewegung 62. Vom Endpunkt K1 führt der elektrooptische Ablenker 13 eine Sprungbewegung 64 bei maximaler Beschleunigung bzw. Geschwindigkeit in Richtung des Punktes K2 durch. K2 definiert somit den Startpunkt einer zweiten Kompensationsbewegung 62 des elektrooptischen Ablenkers 13. Von K2 aus beginnt der elektrooptische Ablenker 13 eine erneute Kompensationsbewegung 62 entgegengesetzt zu der vorangegangenen Kompensationsbewegung 62, bis zum Übergabepunkt 2 (schwarzer Kreis "2" in Fig. 6). Die Definition für Übergabepunkt 2, sowohl zeitlich als auch örtlich, ergibt sich aus der Performance der Scan-Einheit 15 (Beschleunigung führt zu bestimmten Delay-Zeiten).

Das Erreichen des Endpunktes von Vektor #1 bedeutet für die Scan-Einheit 15 im besten Fall das Erreichen des Scheitelpunktes seiner Sprungbewegung 60.

Anschließend wird der Vektor #2 in entgegengesetzte Richtung des Vektors #1 abgefahren, wobei beim Übergang von Vektor #2 zu Vektor #3 im Wesentlichen derselbe Prozess stattfindet, wie beim Übergang von Vektor #1 zu Vektor #2. Anders ausgedrückt führt die Scan-Einheit 15 wieder eine Sprungbewegung 60 aus, welche durch entsprechende Kompensationsablenkungen 62 des elektrooptischen Ablenkers 13 kompensiert wird, sodass die Scantrajektorie der Vektoren im Wesentlichen - wie in Fig. 6 dargestellt - entlang einer geraden Linie und parallel zueinander verläuft.

Der oben in Zusammenhang mit Fig. 6 geschilderte Vorgang ist lediglich ein Beispiel, wie ein Schleppverzug der Scan-Einheit 15 durch eine entsprechende Kompensationsablenkung des elektrooptischen Ablenkers 13 kompensiert werden kann. Der oben geschilderte Vorgang kann ohne Weiteres auf andere Situationen angewendet werden, bei denen ein Schleppverzug besteht, sodass dieser Schleppverzug durch eine geeignete Kompensationsablenkung des elektrooptischen Ablenkers 13 ausgeglichen und kompensiert werden kann. Das oben geschilderte Verfahren bzw. andere vergleichbare Verfahren zum Kompensieren eines Schleppverzugs haben den Vorteil, dass die oben genannten Verzögerungszeiten ("Delays"), welche aus dem Stand der Technik bekannt sind, weggelassen oder reduziert werden können, da die Kompensationsablenkung 62 durch den elektrooptischen Ablenker 13 gleichzeitig zu der Sprungbewegung 60 der Scan-Einheit 15 durchgeführt wird.

Durch die oben geschilderten Verfahren, welche durch eine Kombination aus Scan-Einheit 15 und elektrooptischen Ablenker 13 ermöglicht werden, wird eine Flexibilität möglicher Bestrahlungsmuster bzw. Bestrahlungsabfolgen verbessert und insgesamt kann eine Erhöhung der Prozessproduktivität bei gleichbleibender Qualität des Werkstücks 3 erreicht werden.

Aufgrund der oben beschriebenen Verfahren bietet sich eine Anpassung bzw. Optimierung von Steuerdaten an. Beispielsweise kann jede Schicht eines herzustellenden Werkstücks mithilfe der Steuereinrichtung zu analysieren und entsprechende Steuerdaten für jede Schicht zu erzeugen. Dieser Prozess führt zu Steuerdaten für einen optimierten Bauprozess des Werkstücks, wobei Zeit- und Qualitätsaspekte berücksichtigt und optimiert werden. Insbesondere können Steuerdaten in Abhängigkeit einer Bauteilform (beispielsweise durch CAD-Daten gegeben) des herzustellenden Werkstücks optimiert werden. Weitere Details zur Optimierung von Steuerdaten, welche auch im Zusammenhang mit der vorliegenden Anmeldung angewendet werden können, können der PCT/EP2018/051422 entnommen werden.

Die obigen Verfahren können beispielsweise dafür eingesetzt werden, um zunächst jede Schicht des herzustellenden Werkstücks mithilfe der Steuereinrichtung der Vorrichtung zum Herstellen des Werkstücks zu analysieren. Hierdurch kann bereits das Potenzial für mögliche Optimierungen eingeschätzt werden. Anschließend erstellt die Steuereinrichtung Steuerdaten zur Ansteuerung der Scan-Einheit 15 und des elektrooptischen Ablenkers 13, wobei diese Steuerdaten eine optimierte Verfestigung der jeweiligen Schicht des Werkstücks ermöglichen. Genauer gesagt können die Steuerdaten hinsichtlich des benötigten Zeitaufwands und/oder hinsichtlich der benötigten Detailgenauigkeit optimiert sein. Ein innerer "Kern" des Werkstücks kann hierbei beispielsweise schneller verfestigt werden, wobei im Randbereich des Werkstücks auf eine höhere Detailgenauigkeit geachtet wird, beispielsweise durch das Verwirklichen kleinerer Bewegungen des Lasers in diesem Bereich.

Obwohl die obigen Ausführungsbeispiele eine Scan-Einheit 15 mit beweglichen Spiegeln und einen elektrooptischen Ablenker 13 verwenden, kann alternativ anstelle der Scan-Einheit 15 eine andere erste Ablenkeinheit verwendet werden und/oder anstelle des elektrooptischen Ablenkers 13 eine andere zweite Ablenkeinheit verwendet werden. Hierbei ist einzig und allein relevant, dass die zweite Ablenkeinheit eine höhere Beschleunigung der Position des Laserstrahls ermöglicht, als die erste Ablenkeinheit. Ein Beispiel für eine alternative zweite Ablenkeinheit umfasst beispielsweise mindestens einen akustooptischen Deflektor. Ferner kann beispielsweise sowohl für die erste Ablenkeinheit als auch für die zweite Ablenkeinheit eine Scan-Einheit mit beweglichen Spiegeln verwendet werden (beispielsweise Galvanometerspiegel), wobei die Spiegel der zweiten Ablenkeinheit eine Bewegung bzw. eine Ablenkung des Laserstrahls mit einer höheren Beschleunigung ermöglichen als die Spiegel der ersten Ablenkeinheit.

Ferner kann alternativ zu den oben beschriebenen Ausführungsformen mit einer ersten Ablenkeinheit und einer zweiten Ablenkeinheit (d. h. beispielsweise mit einer Scan-Einheit 15 als erste Ablenkeinheit und einem elektrooptischen Ablenker 13 als zweite Ablenkeinheit) die erste Ablenkeinheit weggelassen werden und sämtliche Ablenkungen des Laserstrahls (innerhalb der Ebene des Rohmaterialpulvers) mit der zweiten Ablenkeinheit durchgeführt werden. Anders ausgedrückt sind Verfahren und Vorrichtungen denkbar, welche lediglich einen elektrooptischen Ablenker als Ablenkeinheit umfassen (und keine Scan-Einheit mit Galvanometerspiegeln), wobei der Laserstrahl lediglich von dem elektrooptischen Ablenker abgelenkt wird. Die oben geschilderten Scan-Verfahren (insbesondere die Verfahren der Ausführungsbeispiele) können in diesem Fall ausschließlich mit dem elektrooptischen Ablenker durchgeführt werden.

## Patentansprüche

1. Verfahren zum Herstellen eines dreidimensionalen Werkstücks, umfassend:
- Bestrahlen einer Rohmaterialschicht (5) mit einem Laserstrahl (7), wobei an einer Stelle, an der der Laserstrahl (7) auf die Rohmaterialschicht (5) trifft, ein Schmelzbad (19) erzeugt wird,
- Verändern einer Position des Laserstrahls (7) auf der Rohmaterialschicht (5) mithilfe einer ersten Ablenkeinheit (15), und
- Verändern der Position des Laserstrahls (7) auf der Rohmaterialschicht (5) mithilfe einer zweiten Ablenkeinheit (13),
wobei die zweite Ablenkeinheit (13) dazu eingerichtet ist, die Position des Laserstrahls (7) mit einer größeren Beschleunigung abzulenken als eine maximal mögliche Beschleunigung einer Ablenkung durch die erste Ablenkeinheit (15), und
wobei das Verfahren ferner umfasst:
- Erzeugen mindestens eines ersten Schmelzbads (19) und eines zweiten Schmelzbads (19), wobei der Laserstrahl (7) durch das Verändern der Position mithilfe der zweiten Ablenkeinheit (13) zwischen dem ersten Schmelzbad (19) und dem zweiten Schmelzbad (19) hin und her bewegt wird, wobei das erste Schmelzbad (19) und das zweite Schmelzbad (19) zeitlich kontinuierlich aufrechterhalten werden und durch das Verändern der Position mithilfe der ersten Ablenkeinheit (15) über die Rohmaterialschicht (5) bewegt werden, und wobei der Laserstrahl (7) durch das Verändern der Position mithilfe der zweiten Ablenkeinheit (13) mit einer Beschleunigung, die mehr als ein Faktor 10 größer ist als die einer Bewegung des ersten Schmelzbads und des zweiten Schmelzbads durch die erste Ablenkeinheit (15), so zwischen dem ersten und dem zweiten Schmelzbad (19) hin und her bewegt wird, dass der Laserstrahl (7) zwischen dem ersten Schmelzbad (19) und dem zweiten Schmelzbad (19) kein Schmelzbad erzeugt.

2. Verfahren nach Anspruch 1, wobei die erste Ablenkeinheit (15) eine Scan-Einheit (15) umfasst, welche mindestens einen beweglichen Spiegel umfasst, und wobei die zweite Ablenkeinheit (13) einen elektrooptischen Ablenker umfasst.

3. Verfahren nach Anspruch 1 oder 2, wobei das Verändern der Position mithilfe der ersten Ablenkeinheit (15) einen Vorschub (21) des Laserstrahls (7) in eine erste Richtung bewirkt und wobei das Verändern der Position mithilfe der zweiten Ablenkeinheit (13) in eine von der ersten Richtung abweichenden zweiten Richtung stattfindet.

4. Vorrichtung zum Herstellen eines dreidimensionalen Werkstücks, umfassend:
- einen Träger (1) zum Aufnehmen mindestens einer Rohmaterialschicht (5),
- eine Bestrahlungseinheit (16) zum Bestrahlen der Rohmaterialschicht (5) mit einem Laserstrahl, sodass an einer Stelle, an der der Laserstrahl (7) auf die Rohmaterialschicht (5) trifft, ein Schmelzbad (19) erzeugt wird,
- eine erste Ablenkeinheit (15) zum Verändern einer Position des Laserstrahls (7) auf der Rohmaterialschicht (5),
- eine zweite Ablenkeinheit (13) zum Verändern der Position des Laserstrahls (7) auf der Rohmaterialschicht (5), und
- eine Steuereinheit (17) zum Steuern von zumindest der ersten Ablenkeinheit (15) und der zweiten Ablenkeinheit (13),
wobei die zweite Ablenkeinheit (13) dazu eingerichtet ist, die Position des Laserstrahls (7) mit einer größeren Beschleunigung abzulenken als eine maximal mögliche Beschleunigung einer Ablenkung durch die erste Ablenkeinheit (15), und wobei die Steuereinheit (17) dazu eingerichtet ist, die erste Ablenkeinheit (15) und die zweite Ablenkeinheit (13) so zu steuern, dass mindestens ein erstes Schmelzbad (19) und ein zweites Schmelzbad (19) erzeugt werden, wobei der Laserstrahl (7) durch das Verändern der Position mithilfe der zweiten Ablenkeinheit (13) zwischen dem ersten Schmelzbad (19) und dem zweiten Schmelzbad (19) hin und her bewegt wird, wobei das erste Schmelzbad (19) und das zweite Schmelzbad (19) zeitlich kontinuierlich aufrechterhalten werden und durch das Verändern der Position mithilfe der ersten Ablenkeinheit (15) über die Rohmaterialschicht (5) bewegt werden, und wobei der Laserstrahl (7) durch das Verändern der Position mithilfe der zweiten Ablenkeinheit (13) mit einer Beschleunigung, die mehr als ein Faktor 10 größer ist als die einer Bewegung des ersten Schmelzbads und des zweiten Schmelzbads durch die erste Ablenkeinheit (15), so zwischen dem ersten und dem zweiten Schmelzbad (19) hin und her bewegt wird, dass der Laserstrahl (7) zwischen dem ersten Schmelzbad (19) und dem zweiten Schmelzbad (19) kein Schmelzbad erzeugt.

5. Vorrichtung nach Anspruch 4, wobei die erste Ablenkeinheit (15) eine Scan-Einheit (15) umfasst, welche mindestens einen beweglichen Spiegel umfasst, und wobei die zweite Ablenkeinheit (13) einen elektrooptischen Ablenker umfasst.

6. Vorrichtung nach Anspruch 4 oder 5, wobei die Steuereinheit (17) dazu eingerichtet ist, die erste Ablenkeinheit (15) und die zweite Ablenkeinheit (13) so zu steuern, dass das Verändern der Position mithilfe der ersten Ablenkeinheit (15) einen Vorschub (21) des Laserstrahls (7) in eine erste Richtung bewirkt und dass das Verändern der Position mithilfe der zweiten Ablenkeinheit (13) in eine von der ersten Richtung abweichenden zweiten Richtung stattfindet.

## Claims

1. A method for producing a three-dimensional workpiece, comprising:
- irradiating a raw material layer (5) with a laser beam (7), wherein a melt pool (19) is produced at a point at which the laser beam (7) strikes the raw material layer (5),
- changing a position of the laser beam (7) on the raw material layer (5) with the aid of a first deflection unit (15), and
- changing the position of the laser beam (7) on the raw material layer (5) with the aid of a second deflection unit (13),
wherein the second deflection unit (13) is adapted to deflect the position of the laser beam (7) with a greater acceleration than a maximum possible acceleration of a deflection by the first deflection unit (15), and wherein the method further comprises:
- producing at least a first melt pool (19) and a second melt pool (19), wherein the laser beam (7) is moved to and fro between the first melt pool (19) and the second melt pool (19) by the change of position with the aid of the second deflection unit (13), wherein the first melt pool (19) and the second melt pool (19) are maintained temporally continuously and are moved over the raw material layer (5) by the change of position with the aid of the first deflection unit (15), and wherein the laser beam (7), by the change of position with the aid of the second deflection unit (13) with an acceleration which is greater by a factor of more than 10 than that of a movement of the first melt pool and of the second melt pool by the first deflection unit (15), is moved to and fro between the first and the second melt pool (19) in such a manner that the laser beam (7) does not produce a melt pool between the first melt pool (19) and the second melt pool (19).

2. The method as claimed in claim 1, wherein the first deflection unit (15) comprises a scan unit (15) which comprises at least one movable mirror, and wherein the second deflection unit (13) comprises an electro-optic deflector.

3. The method as claimed in claim 1 or 2, wherein the change of position with the aid of the first deflection unit (15) effects an advance (21) of the laser beam (7) in a first direction, and wherein the change of position with the aid of the second deflection unit (13) takes place in a direction which is different from the first direction.

4. A device for producing a three-dimensional workpiece, comprising:
- a support (1) for receiving at least one raw material layer (5),
- an irradiation unit (16) for irradiating the raw material layer (5) with a laser beam so that a melt pool (19) is produced at a point at which the laser beam (7) strikes the raw material layer (5),
- a first deflection unit (15) for changing a position of the laser beam (7) on the raw material layer (5),
- a second deflection unit (13) for changing the position of the laser beam (7) on the raw material layer (5), and
- a control unit (17) for controlling at least the first deflection unit (15) and the second deflection unit (13),
wherein the second deflection unit (13) is adapted to deflect the position of the laser beam (7) with a greater acceleration than a maximum possible acceleration of a deflection by the first deflection unit (15), and wherein the control unit (17) is adapted to control the first deflection unit (15) and the second deflection unit (13) in such a manner that at least a first melt pool (19) and a second melt pool (19) are produced, wherein the laser beam (7) is moved to and fro between the first melt pool (19) and the second melt pool (19) by the change of position with the aid of the second deflection unit (13), wherein the first melt pool (19) and the second melt pool (19) are maintained temporally continuously and are moved over the raw material layer (5) by the change of position with the aid of the first deflection unit (15), and wherein the laser beam (7), by the change of position with the aid of the second deflection unit (13) with an acceleration which is greater by a factor of more than 10 than that of a movement of the first melt pool and of the second melt pool by the first deflection unit (15), is moved to and fro between the first and the second melt pool (19) in such a manner that the laser beam (7) does not produce a melt pool between the first melt pool (19) and the second melt pool (19).

5. The device as claimed in claim 4, wherein the first deflection unit (15) comprises a scan unit (15) which comprises at least one movable mirror, and wherein the second deflection unit (13) comprises an electro-optic deflector.

6. The device as claimed in claim 4 or 5, wherein the control unit (17) is adapted to control the first deflection unit (15) and the second deflection unit (13) in such a manner that the change of position with the aid of the first deflection unit (15) effects an advance (21) of the laser beam (7) in a first direction and the change of position with the aid of the second deflection unit (13) takes place in a direction which is different from the first direction.

## Revendications

1. Procédé de production d'une pièce tridimensionnelle, consistant à :
- soumettre une couche de matière première (5) à un faisceau laser (7), un bain de fusion (19) étant généré à un point auquel le faisceau laser (7) frappe la couche de matière première (5),
- changer une position du faisceau laser (7) sur la couche de matière première (5) à l'aide d'une première unité de déviation (15), et
- changer la position du faisceau laser (7) sur la couche de matière première (5) à l'aide d'une seconde unité de déviation (13), et
la seconde unité de déviation (13) étant conçue pour dévier la position du faisceau laser (7) à une accélération supérieure à une accélération possible maximum d'une déviation par la première unité de déviation (15), et le procédé consistant en outre à :
- générer au moins un premier bain de fusion (19) et un second bain de fusion (19), le faisceau laser (7) étant aminé d'un mouvement de va-et-vient entre le premier bain de fusion (19) et le second bain de fusion (19) par le changement de position à l'aide de la seconde unité de déviation (13), le premier bain de fusion (19) et le second bain de fusion (19) étant maintenus en continu dans le temps et sont déplacés sur la couche de matière première (5) par le changement de position à l'aide de la première unité de déviation (15), et par le changement de position à l'aide de la seconde unité de déviation (13) à une accélération qui est supérieure à un facteur de plus de 10 que celui d'un mouvement du premier bain de fusion et du second bain de fusion par l'unité de déviation (15), le faisceau laser (7) étant animé d'un mouvement de va-et-vient entre le premier et le second bain de fusion (19) de manière à ce que le faisceau laser (7) ne produise aucun bain de fusion entre le premier bain de fusion (19) et le second bain de fusion (19).

2. Procédé selon la revendication 1, dans lequel la première unité de déviation (15) comprend une unité de balayage (15) qui comprend au moins un miroir mobile, et dans lequel la seconde unité de déviation (13) comprend un déflecteur électro-optique.

3. Procédé selon la revendication 1 ou 2, dans lequel le changement de position à l'aide de la première unité de déviation (15) provoque une avance (21) du laser (7) dans une première direction, et dans lequel le changement de position à l'aide d'une seconde unité de déviation (13) se produit dans une direction qui est différente de la première direction.

4. Dispositif de production d'une pièce tridimensionnelle, comprenant :
- un support (1) destiné à recevoir au moins une couche de matière première (5),
- une unité de rayonnement (16) destinée à soumettre la couche de matière première (5) à un faisceau laser (7) de manière à ce qu'un bain de fusion (19) soit généré à un point auquel le faisceau laser (7) frappe la couche de matière première (5),
- une première unité de déviation (15) destinée à changer une position du faisceau laser (7) sur la couche de matière première (5),
- une seconde unité de déviation (13) destinée à changer la position du faisceau laser (7) sur la couche de matière première (5), et
- une unité de commande (17) destinée à commander au moins la première unité de déviation (15) et la seconde unité de déviation (13),
la seconde unité de déviation (13) étant conçue pour dévier la position du faisceau laser (7) à une accélération supérieure à une accélération possible maximum d'une déviation par la première unité de déviation (15), et l'unité de commande (17) est conçue pour commander la première unité de déviation (15) et la seconde unité de déviation (13) de manière à ce qu'au moins un premier bain de fusion (19) et un second bain de fusion (19) soient générés, le faisceau laser (7) étant animé d'un mouvement de va-et-vient entre le premier bain de fusion (19) et le second bain de fusion (19) par le changement de position à l'aide de la seconde unité de déviation (13), le premier bain de fusion (19) et le second bain de fusion (19) sont maintenus en continu dans le temps et sont déplacés sur la couche de matière première (5) par le changement de position à l'aide de la première unité de déviation (15), et par le changement de position à l'aide de la seconde unité de déviation (13) à une accélération qui est supérieure à un facteur de plus de 10 à celui d'un mouvement du premier bain de fusion et du second bain de fusion par l'unité de déviation (15), le faisceau laser (7) est animé d'un mouvement de va-et-vient, entre le premier et le second bain de fusion (19) de manière à ce que le faisceau laser (7) ne génère aucun bain de fusion entre le premier bain de fusion (19) et le second bain de fusion (19).

5. Dispositif selon la revendication 4, dans lequel la première unité de déviation (15) comprend une unité de balayage (15) qui comprend au moins un miroir mobile, et dans lequel la seconde unité de déviation (13) comprend un déflecteur électro-optique.

6. Dispositif la revendication 4 ou 5, dans lequel l'unité de commande (17) est conçue pour commander la première unité de déviation (15) et la seconde unité de déviation (13) de manière à ce que le changement de position à l'aide de la première unité de déviation (15) provoque une avance (21) du laser (7) dans une première direction, et dans lequel le changement de position à l'aide d'une seconde unité de déviation (13) se produit dans une direction qui est différente de la première direction.
